# EUROPEAN PATENT SPECIFICATION

(11) **EP 3 419 909 B1**
(45) Date of publication and mention of the grant of the patent: **17.04.2024**
(21) Application number: 17706819.4
(22) Date of filing: 24.02.2017
(51) Int. Cl.: B65D 63/10

(54) **CABLE TIE**
KABELBINDER
ATTACHE DE CABLE

(30) Priority: 24.02.2016 EP 16157060
(43) Date of publication of application: 02.01.2019
(73) Proprietor: Tyco Electronics UK Ltd., Swindon, Wiltshire SN3 5HH (GB)
(72) Inventor: MACNAUGHTON, Roy, Swindon Wiltshire SN1 4LT (GB); EYLES, Jonathan Mark, Swindon Wiltshire SN3 5BW (GB); HAMMOND, Philip, Swindon Wiltshire SN3 5HH (GB)
(74) Representative: Grünecker Patent- und Rechtsanwälte PartG mbB
(86) International application number: PCT/EP2017/054398
(87) International publication number: WO 2017/144699

(56) References cited:
- EP-A1- 1 818 275
- WO-A1-2015/195883
- DE-A1-102009 038 337
- GB-A- 2 108 572
- US-A1- 2002 083 559

## Description

The invention relates to a cable tie.

Cable ties are used for fixing cables to structures or for attaching several cables to each other. The known cable ties are spacious and their heads can cause damage to adjacent substrates or can snag on adjacent structures.

Cable ties are also used for fixing pipes such as air ducts to brackets and for attaching bellows and sleeves to pipes or ducts.

In order to provide a cable tie that uses little space, has a low profile head and thus the potential for damage to adjacent substrates and the risk of snagging on adjacent structures is reduced. A cable tie can comprise a belt, a head that is connected to the belt such that the belt extends away from the head in a belt direction and that has a through-opening for receiving the belt, and a blocking member that is disposed in the head displaceable in a plane of the through-opening along a stroke and that has at least one engagement member configured to lock the belt.

Due to the displaceability in the plane of the through-opening along the stroke, such a cable tie is less spacious than conventional cable ties with a rotational movement. An additional benefit of the 'inline' nature of the tail insertion into the head is that the radial force applied by the cable tie when it is tightened around, say a bellows and duct is more evenly distributed than a conventional tie in which the tail insertion direction is perpendicular to the head.

GB 2 108 572 A shows a hand restraining band clamp strap and a head through which a shank may be passed to form a loop to receive the wrists of a person to be restrained. WO 2015/195883 A1, US 2002/083559 A1, and EP 1 818 275 A1 show different cable ties.

It is an object of the invention to make the operation of the cable tie easy, while keeping the cable tie compact.

This object is achieved by a cable tie according to claim 1, when the blocking member is disposed in the head displaceable along the stroke parallel to the belt direction, wherein the belt direction is parallel to the belt insertion direction along which the belt is inserted into the through-opening and the head comprises a top opening, wherein the blocking member is accessible at least from a top side of the head perpendicular to the belt direction through the top opening.

Preferred embodiments are set out in the dependent claims. The inventive solution can be combined as desired with the following further improvements and advantageous developments.

In order to allow a simple production and in order to save space, the blocking member can be translationally displaceable. In particular, it can be purely translationally displaceable. It can be held or received displaceable, in particular translationally displaceable in the head.

The stroke is parallel to the belt direction and the belt insertion direction of the through-opening to allow simple locking and a compact design.

In an embodiment not forming part of the claimed invention, the stroke can be inclined or perpendicular to the belt direction or the belt insertion direction of the through-opening.

In an embodiment that is simple to manufacture and to operate, the locking by the engagement member can be due to friction between the engagement member and the belt.

If the locking between the engagement member and the belt is due to a positive fit, higher forces can be achieved for the locking. The engagement member can comprise or be configured as positive fit elements, in particular teeth. Similar positive fit elements, in particular teeth can be located on the belt. The positive fit elements can protrude perpendicular to a belt direction away from the belt. For a simple operation with little backlash, the positive fit elements can comprise stop faces running basically perpendicular to the belt direction.

Preferably, a thickness of the head is less than three times a thickness of the belt to allow a flat construction.

The head and/or the blocking member can comprise latches for latching the blocking member to the head. Thus, in particular, an unintentional separation of the two can be avoided. The latching can, in particular, be perpendicular to a belt direction or to a tightening direction. The latches can for example comprise elastically deflectable latching arms or latching protrusions.

The blocking member and the head can be separate elements. In this case, the blocking member and the head can be made from different materials. For example, the blocking member can be made from a harder or tougher material to allow higher forces to be used. The head can be made from a less tough or softer material and thus be produced at lower costs. The use of different materials can also be advantageous when it comes to ease of production. For example, the head can be made from a plastic material in the moulding operation and the blocking member can be made from metal in a more complicated production operation.

The blocking member and/or the head can be integral with each other. They can, for example, be a single plastic element that has been made by moulding. The two can, for instance, be connected by a material bridge which can for example be a thin thread like element. These features allow production of the entire cable tie as a single piece in a single operation.

For example, the head and the blocking member can be integrally connected with each other by a connection section. The connection section can be a section where the size is reduced in one or two dimensions. The connection section can be elongated in a third dimension. In order to allow a certain degree of flexibility at least in one dimension, the connection section can be formed as a belt. The belt can have a width that is greater than a thickness. The width can be greater or less than a length.

The length of the connection section can be such that when the blocking member is inserted, it is held in place by the connection section and for example cannot exit through a top opening or through a back opening.

The cable tie can comprise a hinge structure with a weakened region. Through this, a flexing or bending can be facilitated. The weakened region can have a higher flexibility than neighbouring regions. The hinge structure can be embodied as an integral hinge.

The weakened region can comprise a channel running perpendicular to a tightening direction, a belt insertion direction of the through-opening or a belt direction defined by the belt. The flexibility around, for example, a circumference of a plurality of cables is thus increased and the cable tie can be wrapped around the plurality of cables more closely.

A tightening direction along which the belt is tightened can be parallel or identical to a belt insertion direction of the through-opening and to a belt direction defined by the belt. A direction of a locking motion can be anti-parallel to the belt insertion direction, the tightening direction and/or the belt direction.

The head comprises the top opening, wherein the blocking member is accessible at least from the top side of the head through the top opening. This makes a compact construction possible, in particular in a thickness direction. It is not necessary to have an extra element that closes the top opening and that needs extra space in the thickness direction. Such a top opening can also be used for inserting the blocking member perpendicular to the thickness direction.

In another advantageous embodiment, the head has a front opening at a front side, wherein the front opening is adapted for an insertion of the blocking member through the front opening when the belt is outside the through opening and adapted for blocking an exiting of the blocking member through the front opening when the belt is located in the through opening. The front side is the side where the belt is inserted into the head and is opposite to the back side of the head at which the belt is attached. An advantage of this embodiment is that no extra space above the head is required for inserting the blocking member. Further, an insertion through the front opening is advantageous as the belt is also inserted through the front opening so that an assembly is easy as only access to one side is necessary. Such an embodiment can be advantageous independent of whether a blocking member is disposed in the head displaceable in a plane of the through-opening along a stroke. Other embodiments, where the blocking member is partially or completely rotatable inside the head or wherein the blocking member is displaceable along a stroke in a direction perpendicular to the plane of the through opening are also possible.

An exemplary way of achieving the above embodiment is that an inner height of the front opening is greater than a height of the blocking member and less than the height of the combination of the blocking member and the belt. In such an embodiment, the blocking member can be inserted through the front opening and the belt can be inserted subsequently. Once the belt is inserted, the blocking member can no longer leave the head through the front opening. Engagement members on the blocking member and/or the belt can lock the belt in the head automatically. The locking can for example be released manually by reducing the force on the belt and manually disengaging the engagement members. The belt can then be pulled out of the head.

In another embodiment, the inner height of the front opening can be equal or slightly smaller than the height of the blocking member so that it is necessary to stretch the front opening or to compress the blocking member during the insertion process. Once the blocking member is inserted, such a configuration can hold the blocking member inside the head, even when no belt is inserted.

In both preceding case, the height of the blocking member and the height of the combination of the blocking member and the belt is measured in a height direction that is perpendicular to the belt direction and parallel to the thickness direction of the belt. The height in this case corresponds to the thickness of these elements.

A back opening at the back side can have a size, shape, form and/or configuration that does not allow the blocking member to exit through it, independent of whether the belt is inserted or not. For example, the height of the back opening can be only slightly greater than the thickness or the height of the belt.

In an alternative embodiment that might be easier to produce, the back opening can have a configuration that is similar to the front opening. They can for example have the same shape, form, cross section and/or size as the front opening so that the production by injection moulding is easier than with different configurations.

In order to achieve a flat configuration, the connection section can protrude from the front side of the head. In particular, the connection section can protrude parallel to the belt direction, the tightening direction and/or the plane of the through opening to maintain a flat configuration and minimize the bending.

The connection section can protrude adjacent to the through opening in order to keep the length of the connection section short.

Also in order to achieve a flat configuration and to minimize the bending, the connection section can protrude from a front stop face of the blocking member, the front stop face being the face that abuts the head when the belt tries to pull the blocking member out of the head. The front stop face can in particular be perpendicular to the belt direction, the tightening direction and/or the plane of the through opening. Again, the connection section can protrude parallel to the belt direction, the tightening direction and/or the plane of the through opening.

The connection section can protrude from the blocking member adjacent to the engagement members. In particular, the connection section can lie next to the belt and/or beside the belt and/or touch the belt when the engagement members of the belt and/or the blocking member lock the belt in the head. This can help to keep the dimensions of the front opening small, in particular to achieve a low height of the front opening. For example, the height of the front opening can be such that it is only slightly larger than the combined height of the belt and the connection section when the engagement members block the belt. Through the reduced height of the front opening, the cable tie can be more stable and/or the height of the cable tie can be reduced.

In order to minimize the backlash during a locking motion, the stroke of the blocking member relative to the head can be limited to the pitch of the teeth on the belt or less. To limit the stroke, stop faces can be located on the blocking member and/or on the head.

The head can comprise a base plate on a side opposite the blocking member relative to the belt. The base plate can protect against incorrect assembly, accidental operation or damage and/or support the belt during the locking motion.

In order to achieve higher forces, the blocking member can engage two or more teeth on the belt. Each tooth can then take up a certain force and the force taken up by two or more teeth is higher than when only a single tooth is engaged.

The blocking member and/or the belt can comprise guiding faces running along the tightening direction for guiding the belt.

To achieve a smooth exiting of the belt and thus a flat construction, the head can comprise an inclined output section for the belt. The inclined output section can in particular comprise inclined output faces. The output faces can at least section-wise define channels for the belt. The inclination can be at a small angle to a part of the belt attached to the head so that the part of the belt exiting the head is almost parallel to the part of the belt attached to the head.

The head and/or the blocking member can comprise stop faces for blocking a movement relative to the other when the cable tie is tightened. Such stop faces can in particular be perpendicular to a belt direction or a tightening direction.

The blocking member can comprise a protrusion protruding along a direction of a locking motion, wherein the protrusion is adapted to be pulled below an inner top face of the head and create a positive fit between teeth of the blocking member and the belt. Through this, the blocking member cannot be moved out of the positive fit and a secure operation is provided. The protrusion can for example be pulled into a channel in which the blocking element and the belt are squeezed towards each other.

The head and/or the blocking member can comprise counter stops to prevent a dismantling when untightening or loosening the cable tie. These counter stops can again be perpendicular to a belt direction or a tightening direction.

The head and/or the blocking member can comprise guides for guiding the blocking member relative to the head along the tightening direction. Such guides can be flat surfaces or rails. The guides can prevent jamming or tilting of the blocking member relative to the head so that the operation of the cable tie is reliable.

In an advantageous embodiment, the blocking member is at least partially located under an inner top face of the through-opening in a first position along the stroke and the blocking member is movable in an upward direction beyond the inner top face in a second position. The inner top face can thus push the blocking member onto the belt to achieve a locking in the first position. In the second position, the blocking member can be movable relative to the belt so that the belt is no longer locked and can be tightened along the tightening direction. Once the cable tie is tightened, it can be transferred to the first position in which the blocking member locks the belt.

The relative movement between the belt and the blocking member can, however, only be possible when a force is applied moving the blocking member in a direction perpendicular to the belt direction away from the belt for example by ramps that convert a tightening force into a force that moves the locking member in a direction perpendicular to the belt direction away from the belt. In a neutral or force free position, the blocking member and the belt can overlap in this direction perpendicular to the belt direction. In particular, teeth of the two can engage each other in a neutral position so that the blocking member is automatically pulled into the first position when the tightening force is taken away. There can thus be a bit of interference between the blocking member and the belt in the direction perpendicular to the belt direction.

The inventive solution will now be described in an exemplary manner with reference to the figures. The advantageous embodiments and further developments described herein are advantageous on their own and can be combined as desired.

### In the figures:

- Fig. 1: shows a bottom view of a first embodiment of a cable tie;
- Fig. 2: shows a top view of the first embodiment of a cable tie;
- Fig. 3: shows a front view of the first embodiment of a cable tie;
- Fig. 4: shows a perspective sectional view of the first embodiment of a cable tie;
- Fig. 5: shows a sectional side view of the first embodiment of a cable tie;
- Fig. 6: shows a sectional perspective view of the first embodiment of a cable tie;
- Fig. 7: shows a sectional side view of the first embodiment of a cable tie;
- Fig. 8: shows a bottom view of a second embodiment of a cable tie;
- Fig. 9: shows a top view of the second embodiment of a cable tie;
- Fig. 10: shows a side view of the second embodiment of a cable tie;
- Fig. 11: shows a sectional perspective view of the second embodiment of a cable tie;
- Fig. 12: shows a sectional side view of the second embodiment of a cable tie;
- Fig. 13: shows a perspective view of the second embodiment of a cable tie;
- Fig. 14: shows a sectional perspective view of the second embodiment of a cable tie;
- Fig. 15: shows a sectional side view of the second embodiment of a cable tie;
- Fig. 16: shows a perspective view of a pre-assembly position of the first embodiment of a cable tie;
- Fig. 17: shows a perspective view of the pre-assembly position of the first embodiment of a cable tie from a different angle;
- Fig. 18: shows a front view of the preassembly position of the first embodiment of a cable tie;
- Fig. 19: shows a sectional front view of the first embodiment of a cable tie;
- Figs. 20 A, B, C: show different views of the preassembly position of the first embodiment of a cable tie;
- Figs. 21 A, B, C: show different views of the first embodiment of a cable tie in an assembled position;
- Fig. 22: shows a cable tie according to the invention compared to a conventional cable tie in a perspective view;
- Figs 23 A, B: show perspective views of a further embodiment of a cable tie in different positions;
- Figs. 24 A-G: show different views of the cable tie of Figs. 23 A, B with the blocking member in an outside position;
- Figs. 25 A-G: show different views of the cable tie of Figs. 23 A, B with the blocking member in an inside position;
- Figs. 26 A, B: show two perspective views of the cable tie of Figs. 23 A, B;
- Figs. 27 A, B: show two cross sectional views of a further embodiment of a cable tie in an outside position and an inside position.

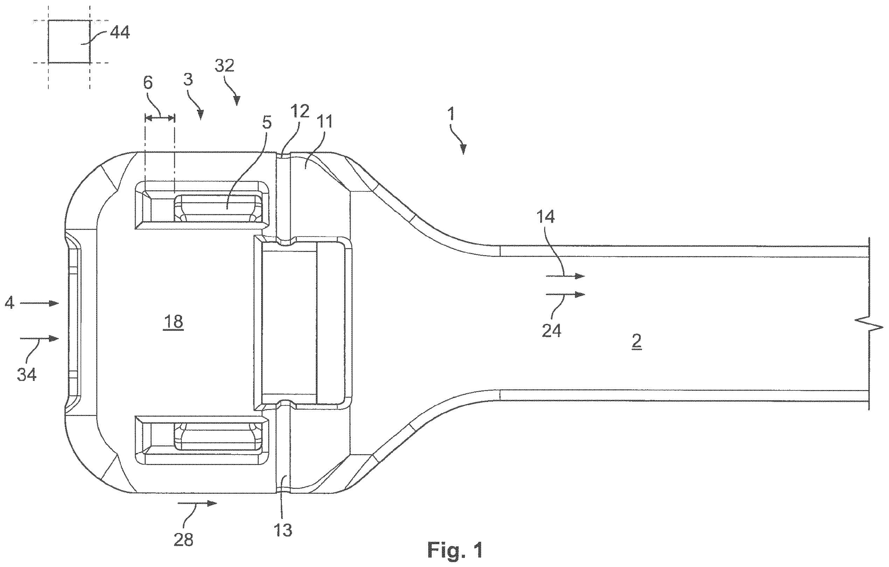

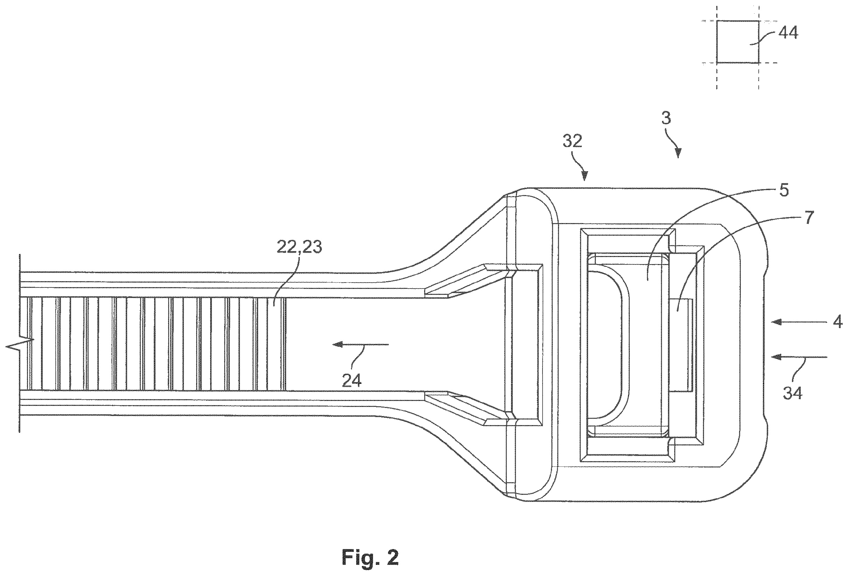

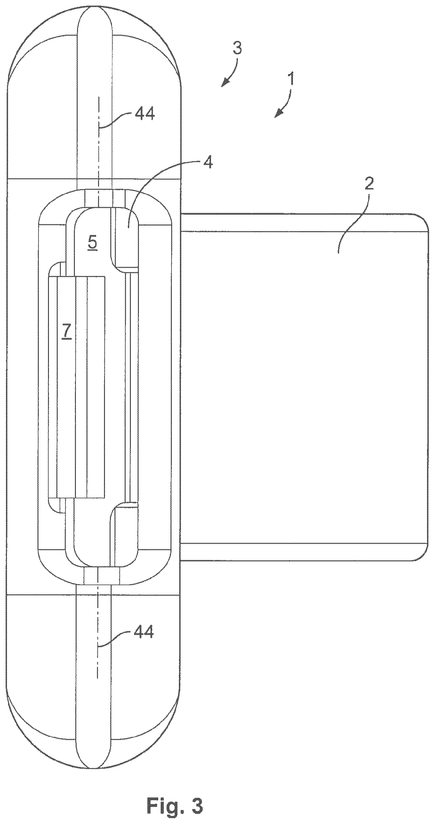

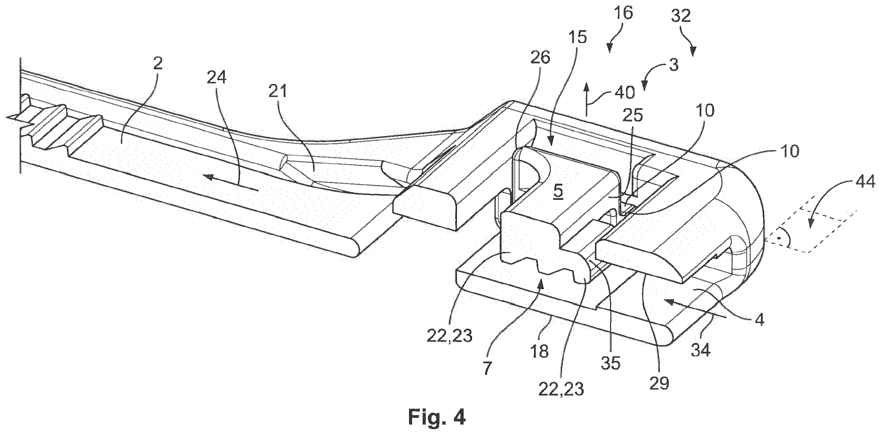

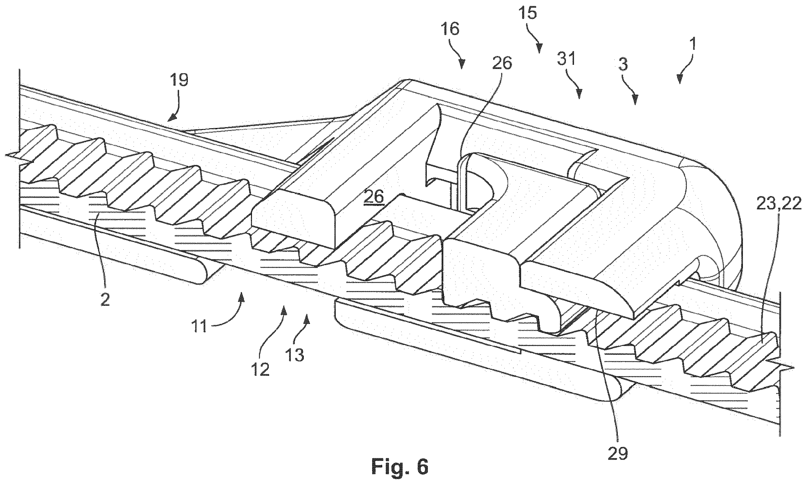

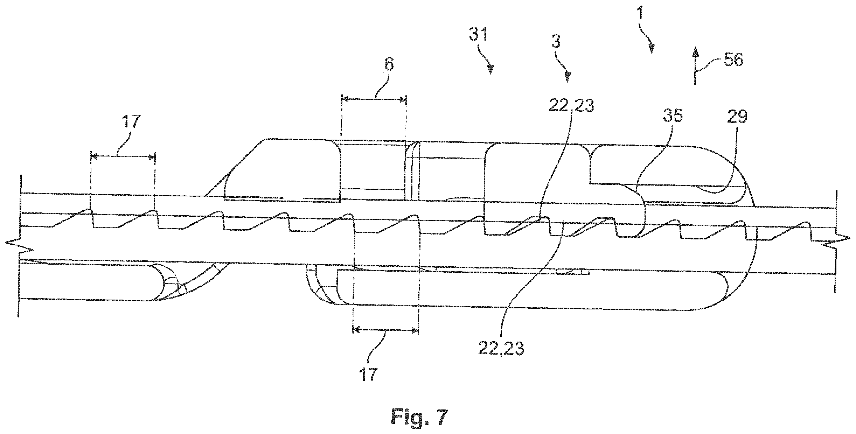

Figures 1 to 7 shows a first embodiment of a cable tie 1 that comprises a belt 2, a head 3 that is connected to the belt 2 and that has a through-opening 4 for receiving the belt 2. A blocking member 5 is disposed in the head 3 displaceable in a plane 44 of the through-opening along a stroke 6 and has several engagement members 7 configured to lock the belt 2. The blocking member 5 is in this embodiment translationally displaceable along a tightening direction 14, a belt direction 24 or a belt insertion direction 34 along which the belt 2 is inserted into the through-opening 4. In another, non-claimed embodiment, the displaceability could be perpendicular to these directions 14, 24, 34 but still in the plane 44 of the through-opening.

In a first position 31, the blocking member 5 is partially located under an inner top face 29 of the head 3. In this position, engagement members 7 of the blocking member 5 that are configured as positive fit elements 22 in particular as teeth 23, cooperate with corresponding positive fit elements 22 configured as teeth 23 on the belt 2 and block a movement of the belt 2 against the tightening direction 14.

In a second position 32, the blocking member 5 is movable beyond the inner top face 29 in an upward direction 40 that runs perpendicular to the tightening direction 14. The belt 2 can then be tightened in the tightening direction 14.

The tightening direction 14 runs parallel to the belt direction 24 and the belt insertion direction 34 along which the belt is inserted into the through-opening 4. The tightening direction 14 runs anti-parallel to a direction 28 of a locking motion by which the belt 2 is locked in the head 3.

When the cable tie 1 is used, the belt 2 is inserted along the belt insertion direction 34 into the through-opening 4 and then tightened by pulling on the free end. Once tightening is no longer possible, the belt 2 pulls back the blocking member 5 which then, due to an inclined face 35, partially slides under the inner top face 29 of the head. By this, the blocking member 5, in particular the protrusion 51 of the blocking member 5, is pulled into the through-opening 4 and a positive fit between the engagement members 7 of the blocking member 5 and the positive fit elements 22 of the belt 2 is automatically achieved. The belt 2 is thus locked relative to the blocking member 5 and the head 3.

The teeth 23 in the first embodiment are designed as ramps with a slightly inclined first face for a smooth guiding and a steep second face for achieving a positive fit.

For blocking the movement of the blocking member 5 relative to the head 3 against the tightening direction 14, stop faces 25 are present on the blocking member 5 and the head 3. The stop faces 25 are perpendicular to the tightening direction 14.

In order to block the movement in the counter direction, counter stop faces 26 are located on the blocking member 5 and the head 3. The counter stop faces 26 are perpendicular to the tightening direction 14.

The cable tie 1 further comprises a hinge structure 11 with a weakened region 12. The weakened region 12 has a higher flexibility than the neighbouring regions and allows a flexing or bending of the cable tie 1. The weakened region 12 is embodied as a channel 13 running perpendicular to the tightening direction 14.

The cable tie 1 further comprises an inclined output section 21 that allows a smooth exiting of the belt 2 from the head 3.

A thickness 8 of the head is less than three times a thickness 9 of the belt 2 so that the entire cable tie 1 is very flat and compact.

The head 3 and the blocking member 5 comprise latches 10 with which the two are connected and latched to each other. An accidental loss is thus avoided.

The blocking member 5 and the head 3 can be made from different materials, for example from materials with a different hardness. The blocking member 5 can, for example, be harder in order to achieve a safe positive fit, while the head 3 is softer and cheaper.

In the embodiment shown, the blocking member 5 and the head 3 are separate elements. However, they can also be integral with each other and for example be connected by a material bridge. Such an embodiment is easy to manufacture and the locking member 5 cannot be lost.

Similarly, the head 3 and the belt 2, which are integral in the examples, can also be separate elements that are only connected to each other.

The stroke 6 is parallel to a belt insertion direction 34 of the through-opening 4 to allow a compact design.

The head 3 comprises a top opening 15 and the blocking member 5 is accessible from a top side 16. This keeps the construction flat as no covering on the top side 16 is necessary. Further, the blocking member 5 can be inserted into the head 3 through the top opening 15.

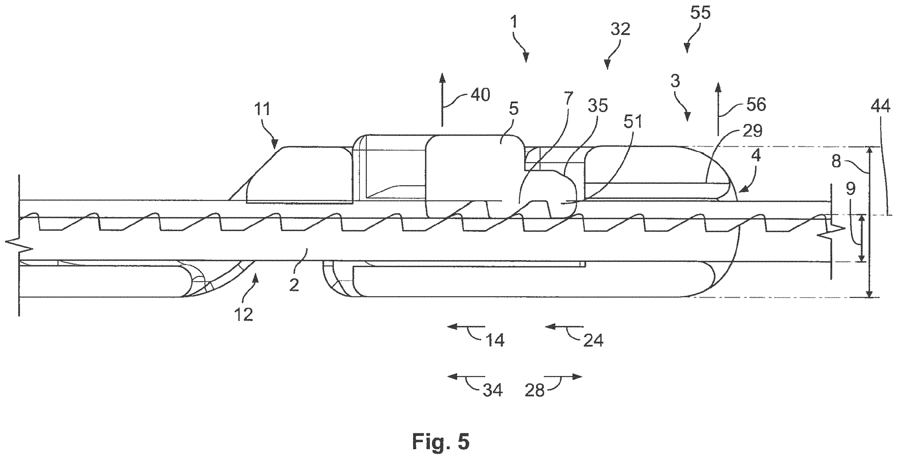

The stroke 6 in the first embodiment is smaller than a pitch 17 between two teeth 23 to minimize the backlash. In a force free position 55 shown for example in Fig. 5, the belt 2 and the blocking member 5 overlap at least partially in a direction 56 perpendicular to the belt direction 24. When the belt 2 is pulled in the tightening direction 14, the teeth 23 of the belt 2 engage teeth 23 of the blocking member 5 by creating a force that is perpendicular to the belt direction 14. When the teeth 23 snap behind each other, the blocking member 5 can automatically be pulled or moved by the belt 2 when the belt 2 moves against the tightening direction 14 and in the direction 28 of the locking motion. A protrusion 51 can then be automatically pulled under an inner top face 29 of the head 3 and create a positive fit between the teeth 23 of the blocking member 5 and the teeth 23 of the head 3.

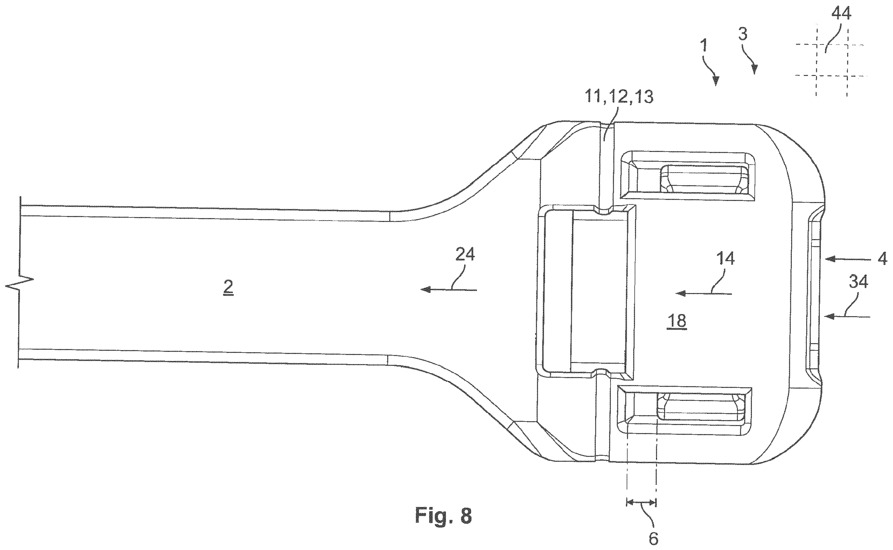

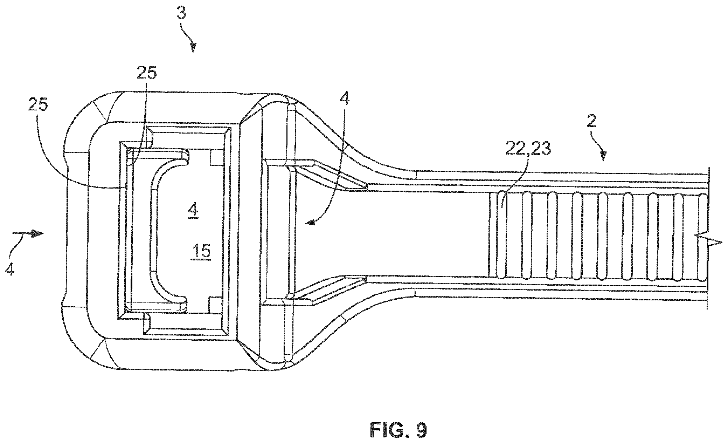

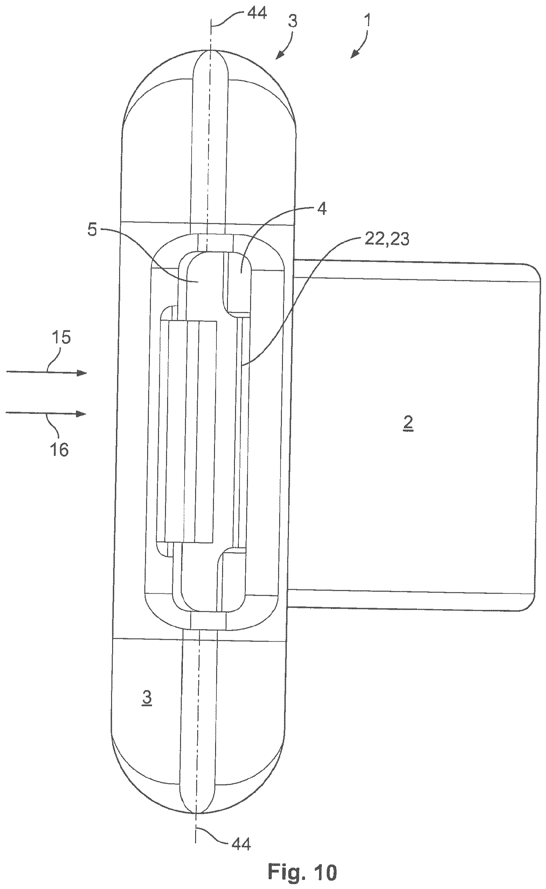

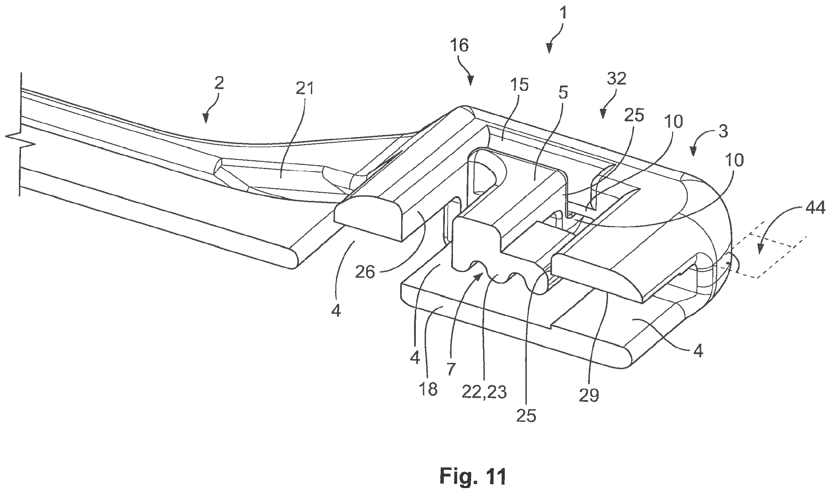

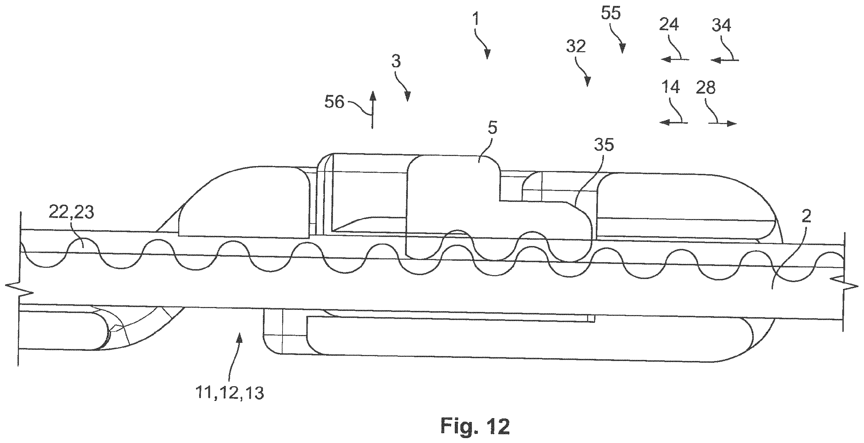

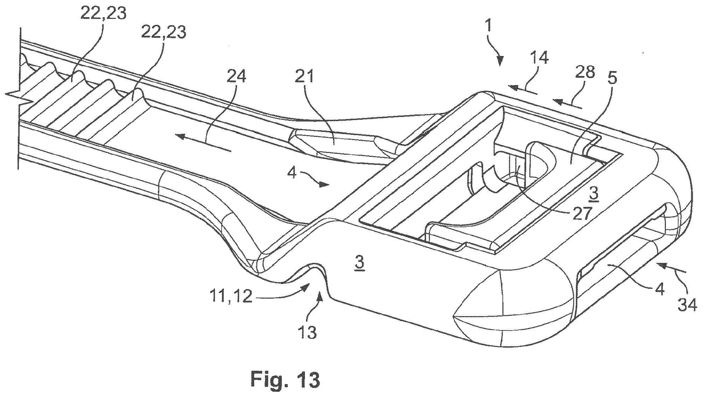

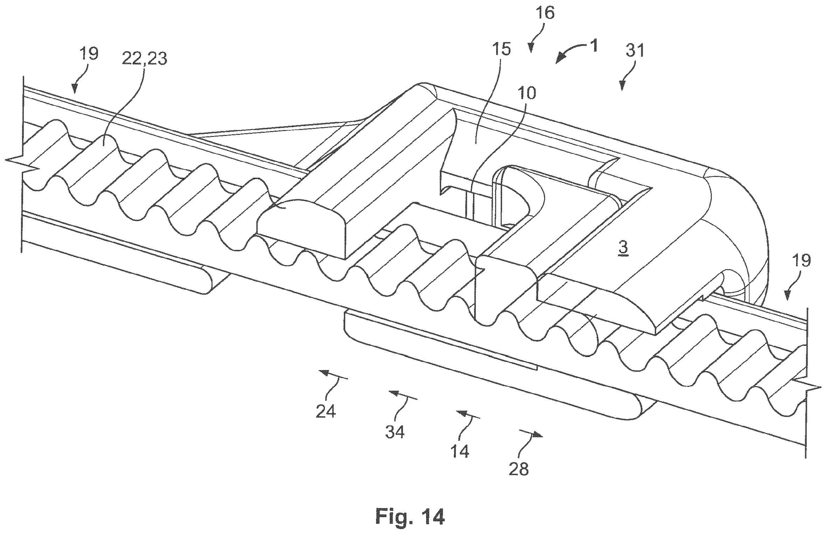

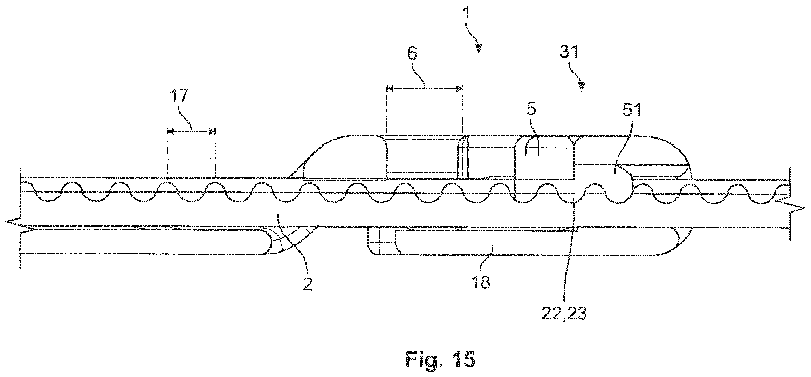

In Figs. 8 to 15, a second embodiment of a cable tie 1 is depicted. The second embodiment is similar to the first embodiment but has round teeth 23 as the positive fit elements 22. The positive fit elements 22 of the blocking member 5 and the belt 2 are complementary to each other so that a gapless fit between the two is achieved.

Similar to the first embodiment, the second embodiment also has a base plate 18 that protects and supports the belt 2 opposite the side on which the blocking member 5 is located. The belt 2 is located between the blocking member 5 and the base plate 18.

The first and the second embodiment both have more than one tooth 23 for engagement. In each case, three teeth 23 are present so that the holding force is higher than in an embodiment in which only one tooth is present.

The blocking member 5 and the belt 2 comprise guiding faces 19 for guiding the belt 2 along the blocking member 5.

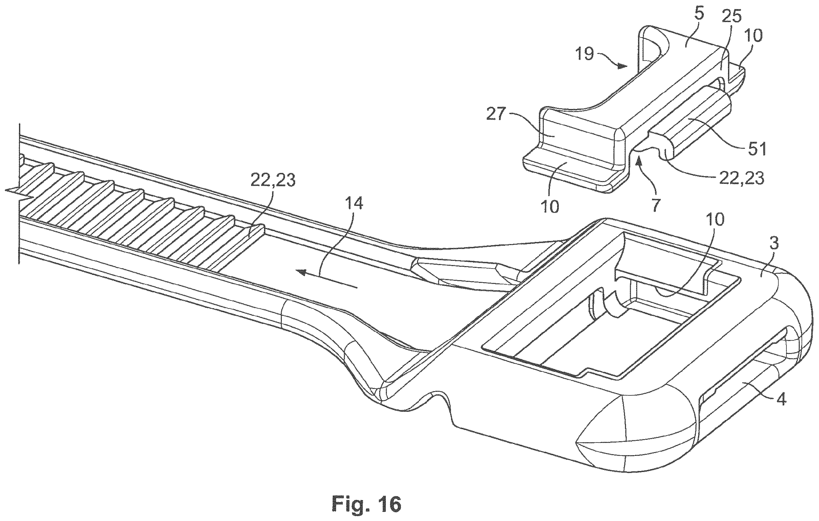

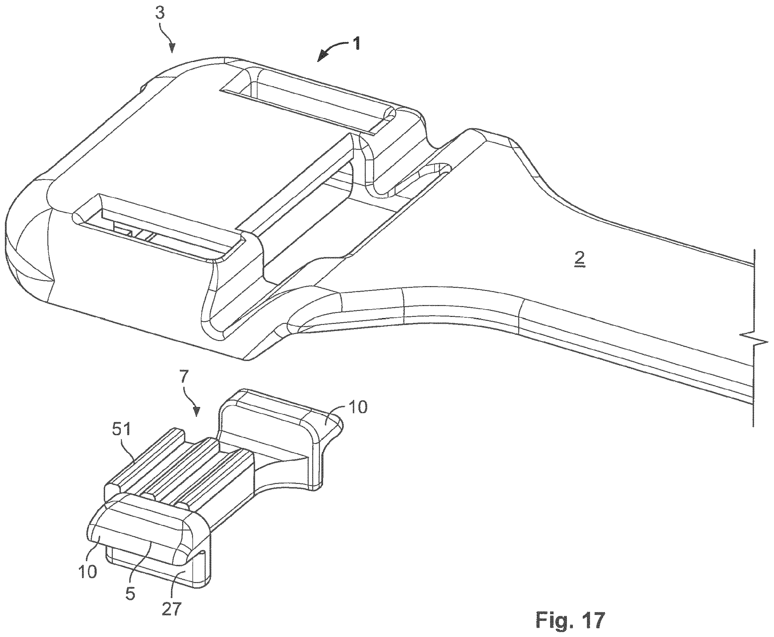

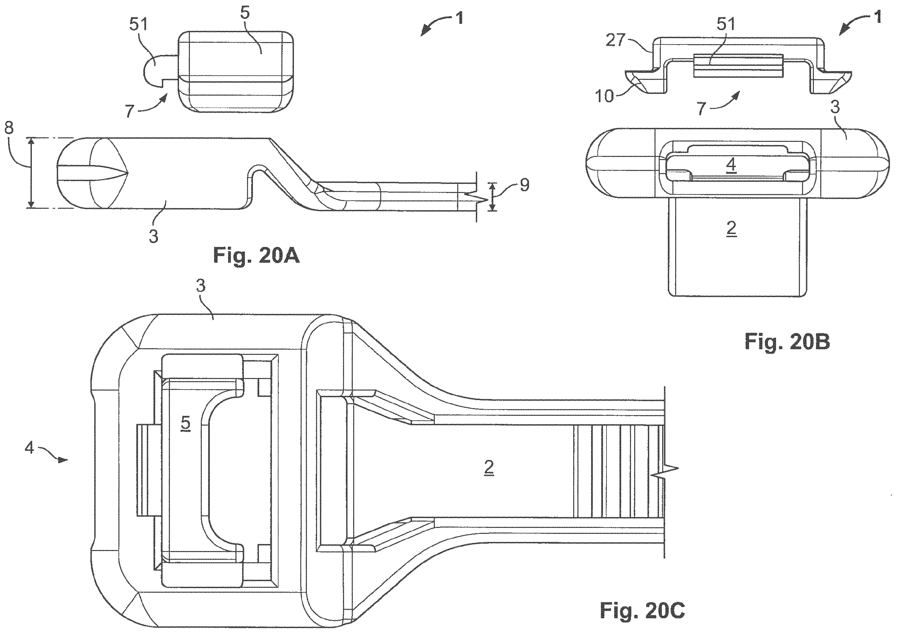

In Figs. 16 to 18 and 20 A, B, C, the first embodiment of a cable tie is again shown in the preassembled position in which the blocking member 5 is not yet inserted into the head 3. In particular, latches 10 with which the blocking member 5 is latched to the head 3 are visible.

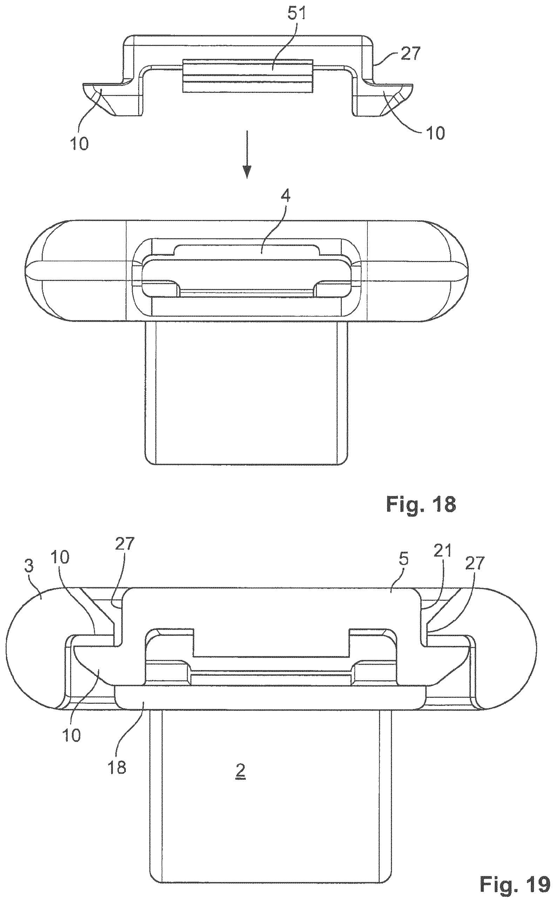

Further, guides 27 for guiding the blocking member 5 inside the head 3 can be seen. In Fig. 19 the sectional front view is shown in which the effect of the latch 10 can be seen.

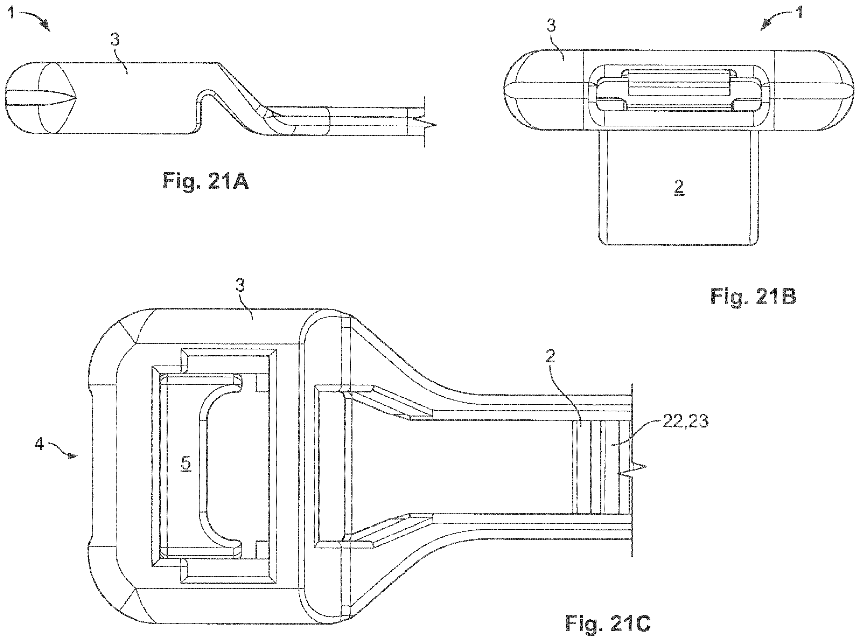

Figs. 21 A, B, C show further views of the assembled first embodiment of a cable tie 1.

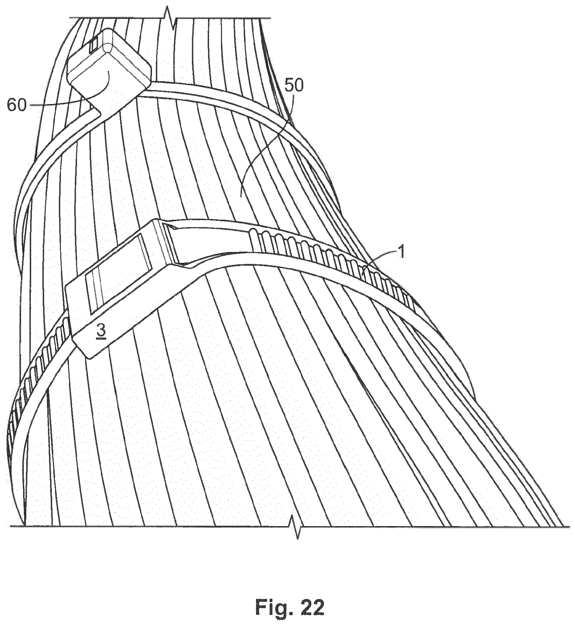

In Fig. 22, an inventive cable tie 1 can be seen in the foreground and a conventional cable tie 60 can be seen in the background, both being wrapped around a plurality of cables 50. The inventive cable tie 1 is significantly flatter than the conventional cable tie 60.

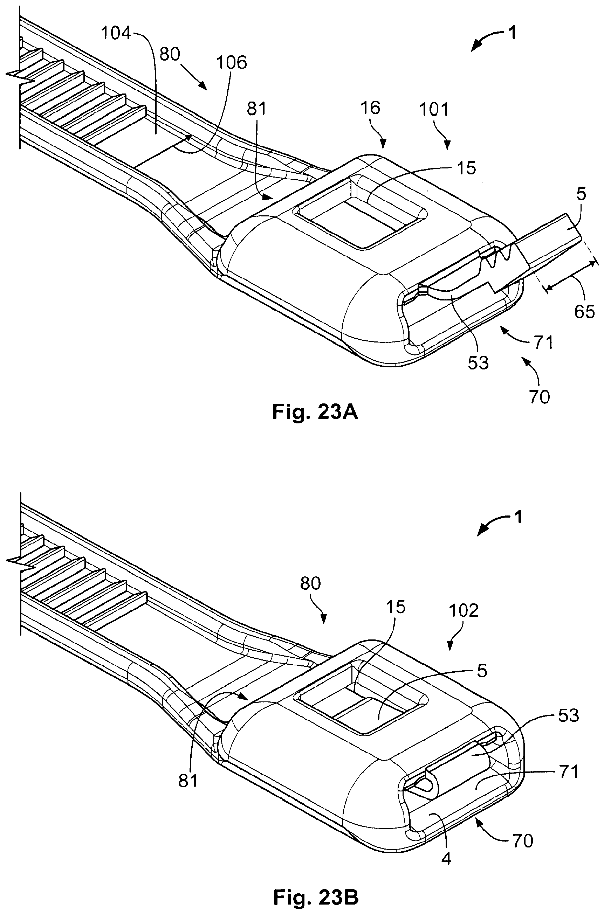

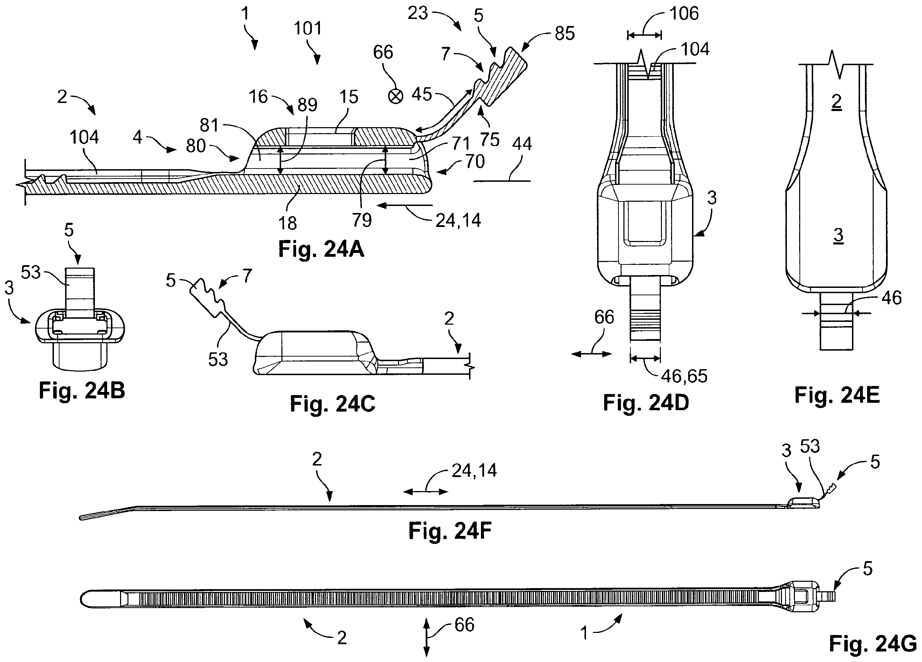

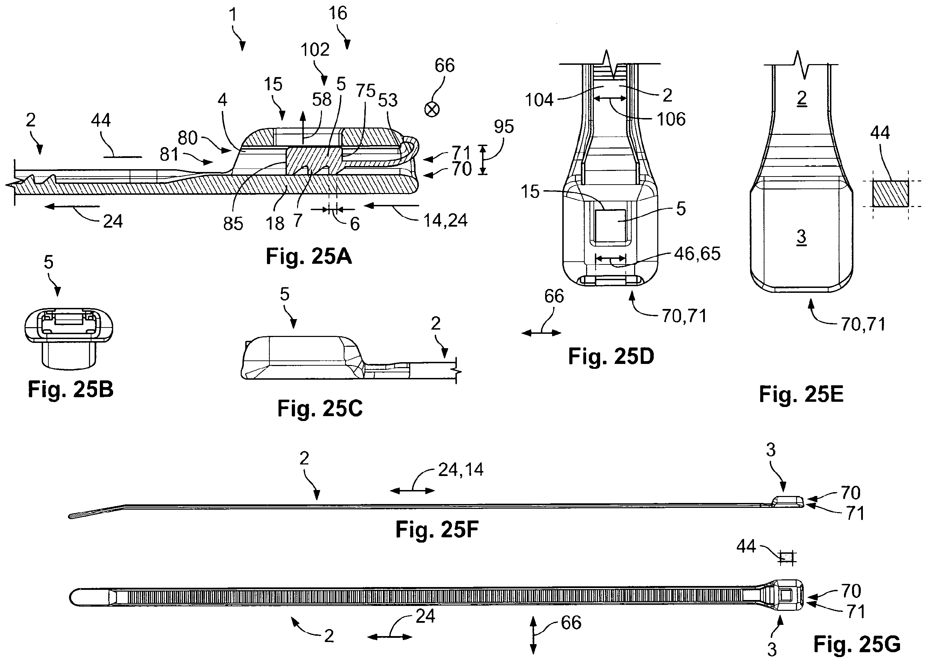

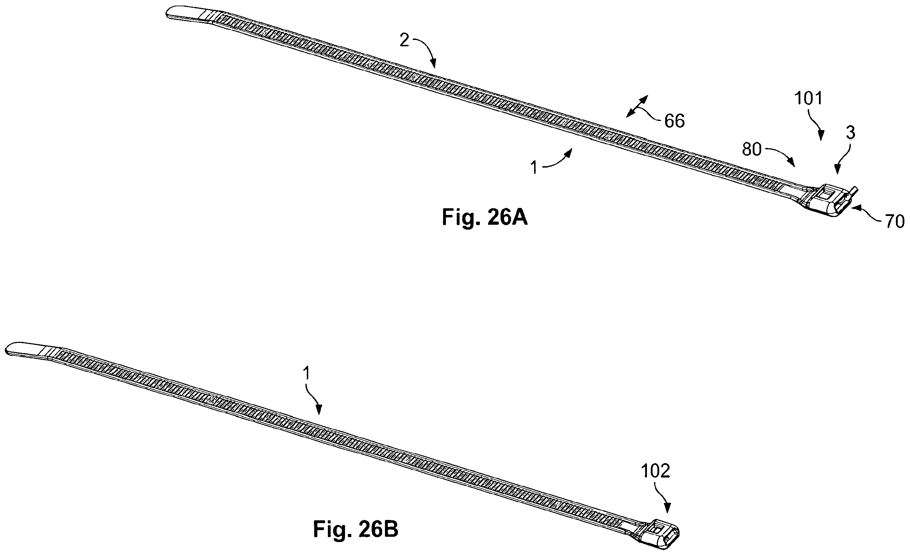

Figs. 23 A and 23 B show a further embodiment of a cable tie 1. Further details of this embodiment are shown in Figs. 24 A to G, in which an outside position 101 of the blocking member 5 is depicted, in Figs 25 A to G, in which an inside position 102 of the blocking 5 is depicted, and in Figs. 26 A and 26 B in which the entire cable tie 1 is shown.

This embodiment differs from the previous embodiment in two aspects. First, the blocking member 5 is connected to the head 3 by a connection section 53, wherein the connection section 53 is integral with the blocking member 5 and the head 3. Thus, the entire cable tie 1 is one single element that can for example be made by injection moulding in a single cavity. The one-piece design further has the advantage that the blocking member 5 cannot be lost and that the handling of the cable tie 1 is easier than with separate elements.

Second, the blocking member 5 can be inserted through a front opening 71 at a front side 70 of the head 3. The front side 70 is the side that is opposite to the backside 80 at which the belt is located. It is also the side at which the belt 2 is inserted into the head 3. Such a configuration allows to introduce the belt 2 and the blocking member 5 from the same side so that only access to this front side 70 is necessary. In particular no access from the backside 80 or from the top side 16 is necessary.

The connection section 53 is formed as a belt 52 whose length 45 is slightly less than its width 46 which is measured in a width direction 66 that is perpendicular to the belt direction 24/tightening direction 14 and perpendicular to the height direction 90 or a thickness direction 91 which are both perpendicular to the belt direction 24 or the tightening direction 14. The width 46 in turn is greater than the height or thickness 49 of the connection section 53. Such a configuration has the advantage that a high degree of flexibility between the head 3 and the blocking member 5 is achieved in particular relating to a bending or flexing about the width direction 66. The width 46 of the connection section 53 is equal to the width 65 of the blocking member 5 so that an easy production is possible. The width 46 also corresponds to an inner width 106 of a groove 104 of the belt 2 so that the groove can serve as a guidance for the locking member 5 and the connection section 53.

In the depicted embodiment, the thickness or height 95 of the blocking member 5 is slightly less than the inner height 79 of the front opening 71. The blocking member 5 can thus be inserted easily.

The connection section 53 has a length 45 that additionally avoids exiting of the blocking member 5 through the top opening 15 through the top side 16 or the back opening 81, which has the same dimensions as the front opening 71, both being parts of the through opening 4.

In an alternative embodiment, the thickness or height 95 of the blocking member 5 can be slightly greater than the inner height 79 of the front opening 71. Thus, a slight stretching of the front opening 71 and/or a slight compression of the blocking member 5 would be necessary when the blocking member 5 is inserted through the front opening 71 into the head 3. Once the blocking member 5 is fully inserted in such an embodiment, the stretching and the compression would relax so that the blocking member 5 can no longer escape through the front opening 71 or the back opening 81.

Once the blocking member 5 is fully inserted and is thus disposed in the head 3, the belt 2 is inserted through the front opening 71 into the head 3. The blocking member 5 is displaceable in a plane 44 of the through opening 4 along a stroke 6 and subsequently perpendicular thereto. It can further be at least partially rotated along a rotation path 58. Through this, the belt 2 can be slid through the head 3 for tightening. Once the tightening is completed, engagement members 7, which are again formed as teeth 23, lock the belt 2 in the head 5 when a front stop face 75 on the blocking member 5 blocks a movement of the blocking member 5 in the head 3.

The fact that the height 99 of the combination of the belt 2 and the blocking member 5 is greater than the height 79 of the through opening additionally prevents an exiting of the blocking member 5 through the front opening 71. It should be noted that the height of the combination of the belt 2 and the blocking member 5 is not only the sum of the heights 94, 95 of the belt 2 and the blocking member 5 respectively, but is less than this sum due to the fact that the blocking member 5 is at least partially complementary and at least partially fits into the groove 104 of the belt 2.

For releasing the cable tie 1, the belt2 can be pulled further along the belt direction 24 or the tightening direction 14 so that the blocking member 5 can then be moved away from the belt 2 by an upwards movement and an at least partial rotation along the rotation path 58. This can for example be done manually through the top opening 15, for instance by applying a tool like a screw driver. Then, the belt 2 can be pulled out of the head 3 counter to the tightening direction 14 and the belt direction 24.

As before, the head 3 has a base plate 18 so that no access from below is possible and no dirt or contaminations can enter the head 3 from below. The above embodiment would also work without a top opening 15 that is open to an outside. This could further lower the risk of contaminations or dirt entering the head 3. However, then it might be more difficult to loosen the cable tie 1.

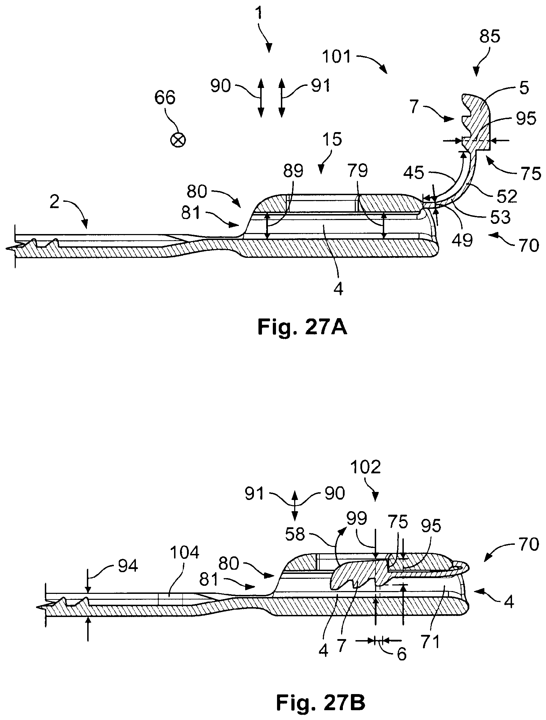

In Figs. 27 A and 27 B, a further embodiment of a cable tie 1 is shown which is similar to the one in Figs. 23 A to 26 B. However, one difference is for example that the blocking member 5 is more rounded at the free end at which a back stop face 85 is located. Such a configuration allows a simpler insertion into the front opening 71.

Further, the front opening 71 is straight at the end which is different from the slightly funnel-like entry section of the front opening 71 in the embodiment of Figs. 23 A to 26 B, which facilitates an insertion.

In the latter two embodiments, the connection section 53 protrudes adjacent to the front opening 71 from the front side 70 of the head 3. It protrudes in particular parallel to the belt direction 24 and the tightening direction 14 and parallel to the plane 44 of the through opening 4. This ensures a flat profile of the cable tie 1.

Further, in both of the latter embodiments, the connection section 53 protrudes adjacent to a front stop face 75 of the blocking member 5 and adjacent to the engagement members 7 from the blocking member 5 to allow a flat configuration. In the inside position 102, the connection section 53 protrudes parallel to the belt direction 24 and the tightening direction 14 from the blocking member 5 and runs through the front opening 71.

In Fig. 27 B, it is in particular shown that due to the engagement of the belt 2 and the blocking member 5 the height 99 of the combination of belt 2 and the blocking member 5 is less than the sum of the height 95 of the blocking member 5 and the height 94 of the belt 2. To show this, a part of a belt 2 is depicted in broken lines below the blocking member 5.

The blocking member 5 of the embodiment shown in Figs. 27 A and 27 B has again a height 95 that is slightly less than the height 79 of the front opening 71 so that this embodiment allows an easy insertion of the blocking member 5 into the head 3 without exerting stretching or compressing forces. However, when the blocking member 5 has been inserted in the head 3 and the belt 2 has been inserted subsequently, the height 99 of the combination of the belt 2 and the blocking member 5 is a less than the inner height 79 of the front opening 71, avoiding an exiting of the blocking member 5 from the head 3.

### REFERENCE NUMERALS

- 1: cable tie
- 2: belt
- 3: head
- 4: through-opening
- 5: blocking member
- 6: stroke
- 7: engagement member
- 8: thickness of the head
- 9: thickness of the belt
- 10: latch
- 11: hinge structure
- 12: weakened region
- 13: channel
- 14: tightening direction
- 15: top opening
- 16: top side
- 17: pitch
- 18: base plate
- 19: guiding face
- 21: inclined output section
- 22: positive fit element
- 23: tooth
- 24: belt direction
- 25: stop face
- 26: counter stop face
- 27: guide
- 28: direction of a locking motion
- 29: inner top face
- 31: first position
- 32: second position
- 34: belt insertion direction
- 35: face
- 40: upward direction
- 44: plane of the through-opening
- 45: length of the connection section
- 46: width of the connection section
- 49: height of the connection section
- 50: cable
- 51: protrusion
- 52: belt
- 53: connection section
- 55: force-free position
- 56: direction perpendicular to block direction
- 58: rotational path
- 60: conventional cable tie
- 65: width of blocking member
- 66: width direction
- 70: front side
- 71: front opening
- 75: front stop face
- 79: height of the front opening
- 80: back side
- 81: back opening
- 85: back stop face
- 89: height of the back opening
- 90: height direction
- 91: thickness direction
- 94: height of the belt
- 95: height of the blocking member
- 99: height of combination of the belt and the blocking member
- 101: outside position
- 102: inside position
- 104: groove
- 106: inner width

## Claims

1. Cable tie (1) comprising a belt (2), a head (3) that is connected to the belt (2) such that the belt (2) extends away from the head (3) in a belt direction (24) and that has a through-opening (4) for receiving the belt (2), and a blocking member (5) that is disposed in the head (3) displaceable along a stroke (6) and that has at least one engagement member (7) configured to lock the belt (2) **characterized in that** the blocking member (5) is disposed in the head (3) displaceable along the stroke (6) parallel to the belt direction (24), wherein the belt direction (24) is parallel to the belt insertion direction (34) along which the belt (2) can be inserted into the through-opening (4), and the head (3) comprises a top opening (15), wherein the blocking member (5) is accessible at least from a top side (16) of the head (3) perpendicular to the belt direction (24) through the top opening (15).

2. Cable tie (1) according to claim 1, wherein the head (3) and/or the blocking member (5) comprise stop faces (25), in particular stop faces (25) that are perpendicular to a belt direction (24) or a tightening direction (14), for blocking a movement relative to the other when the cable tie (1) is tightened.

3. Cable tie (1) according to one of claims 1 or 2, wherein the blocking member (5) and the head (3) are made from different materials.

4. Cable tie (1) according to one of claims 1 to 3, wherein the blocking member (5) comprises a protrusion (51) protruding along a direction (28) of a locking motion, wherein the protrusion is adapted to be pulled below an inner top face (29) of the head (3) and create a positive fit between teeth (23) of the blocking member (5) and the belt (2).

5. Cable tie (1) according to one of claims 1 to 4, wherein the blocking member (5) engages two or more teeth (23) on the belt (2).

6. Cable tie (1) according to one of claims 1 to 5, wherein the blocking member (5) and/or the belt (2) comprise guiding faces (19) running along the tightening direction (14) for guiding the belt.

7. Cable tie (1) according to one of claims 1 to 6, wherein the head (3) and the blocking member (2) are integrally connected with each other by a connection section (53).

8. Cable tie (1) according to claim 7, wherein the connection section (53) is formed as a belt (2).

9. Cable tie (1) according to one of claims 1 to 8, wherein the head (3) has a front opening (71) at a front side (70), wherein the front opening (71) is adapted for an insertion of the blocking member (5) through the front opening (71) when the belt (2) is outside the through-opening (4) and adapted for blocking an exiting of the blocking member (5) through the front opening (71) when the belt (2) is located in the through-opening (4).

10. Cable tie (1) according to claim 9, wherein an inner height (79) of the front opening (71) is greater than a height (95) of the blocking member (5) and less than the height (99) of the combination of the blocking member (5) and the belt (2).

11. Cable tie (1) according to one of claims 7 to 10, wherein the connection section (53) protrudes from a front side (70) of the head (3).

12. Cable tie (1) according to one of claims 7 to 11, wherein the connection section (53) protrudes from the head (3) adjacent to the front opening (71).

## Patentansprüche

1. Kabelbinder (1), umfassend einen Riemen (2), einen Kopf (3), der mit dem Riemen (2) so verbunden ist, dass sich der Riemen (2) in einer Riemenrichtung (24) vom Kopf (3) weg erstreckt, und der eine Durchgangsöffnung (4) zur Aufnahme des Riemens (2) aufweist, und ein Blockierelement (5), das in dem Kopf (3) entlang eines Hubs (6) verschiebbar angeordnet ist und das mindestens ein Eingriffselement (7) aufweist, das dazu konfiguriert ist, den Riemen (2) zu verriegeln, **dadurch gekennzeichnet, dass** das Blockierelement (5) in dem Kopf (3) entlang des Hubs (6) parallel zu der Riemenrichtung (24) verschiebbar angeordnet ist, wobei die Riemenrichtung (24) parallel zu der Riemeneinführrichtung (34) ist, entlang der der Riemen (2) in die Durchgangsöffnung (4) eingeführt werden kann, und der Kopf (3) eine obere Öffnung (15) umfasst, wobei das Blockierelement (5) zumindest von einer Oberseite (16) des Kopfes (3) senkrecht zu der Riemenrichtung (24) durch die obere Öffnung (15) zugänglich ist.

2. Kabelbinder (1) nach Anspruch 1, wobei der Kopf (3) und/oder das Blockierelement (5) Anschlagflächen (25) umfassen, insbesondere Anschlagflächen (25), die senkrecht zu einer Riemenrichtung (24) oder einer Spannrichtung (14) verlaufen, um eine Bewegung relativ zueinander zu blockieren, wenn der Kabelbinder (1) gespannt wird.

3. Kabelbinder (1) nach einem der Ansprüche 1 oder 2, wobei das Blockierelement (5) und der Kopf (3) aus unterschiedlichen Materialien bestehen.

4. Kabelbinder (1) nach einem der Ansprüche 1 bis 3, wobei das Blockierelement (5) einen Vorsprung (51) umfasst, der entlang einer Richtung (28) einer Verriegelungsbewegung vorsteht, wobei der Vorsprung dazu eingerichtet ist, unter eine innere Oberseite (29) des Kopfes (3) gezogen zu werden und einen Formschluss zwischen Zähnen (23) des Blockierelements (5) und dem Riemen (2) zu erzeugen.

5. Kabelbinder (1) nach einem der Ansprüche 1 bis 4, wobei das Blockierelement (5) in zwei oder mehr Zähne (23) am Riemen (2) eingreift.

6. Kabelbinder (1) nach einem der Ansprüche 1 bis 5, wobei das Blockierelement (5) und/oder der Riemen (2) Führungsflächen (19) umfassen, die entlang der Spannrichtung (14) verlaufen, um den Riemen zu führen.

7. Kabelbinder (1) nach einem der Ansprüche 1 bis 6, wobei der Kopf (3) und das Blockierelement (2) durch einen Verbindungsabschnitt (53) einstückig miteinander verbunden sind.

8. Kabelbinder (1) nach Anspruch 7, wobei der Verbindungsabschnitt (53) als Riemen (2) ausgebildet ist.

9. Kabelbinder (1) nach einem der Ansprüche 1 bis 8, wobei der Kopf (3) an einer Vorderseite (70) eine vordere Öffnung (71) aufweist, wobei die vordere Öffnung (71) zum Einführen des Blockierelements (5) durch die vordere Öffnung (71) eingerichtet ist, wenn sich der Riemen (2) außerhalb der Durchgangsöffnung (4) befindet, und zum Blockieren eines Austritts des Blockierelements (5) durch die vordere Öffnung (71) eingerichtet ist, wenn sich der Riemen (2) in der Durchgangsöffnung (4) befindet.

10. Kabelbinder (1) nach Anspruch 9, wobei eine innere Höhe (79) der vorderen Öffnung (71) größer ist als eine Höhe (95) des Blockierelements (5) und kleiner als die Höhe (99) der Kombination aus dem Blockierelement (5) und dem Riemen (2).

11. Kabelbinder (1) nach einem der Ansprüche 7 bis 10, wobei der Verbindungsabschnitt (53) von einer Vorderseite (70) des Kopfes (3) vorsteht.

12. Kabelbinder (1) nach einem der Ansprüche 7 bis 11, wobei der Verbindungsabschnitt (53) von dem Kopf (3) neben der vorderen Öffnung (71) vorsteht.

## Revendications

1. Collier de serrage (1) comprenant une courroie (2), une tête (3) reliée à la courroie (2) de sorte que la courroie (2) s'étende à l'écart de la tête (3) dans une direction de courroie (24) et qui a une ouverture traversante (4) pour recevoir la courroie (2), et un élément de blocage (5) qui est disposé dans la tête (3) déplaçable le long d'une course (6) et qui comporte au moins un élément d'engagement (7) configuré pour verrouiller la courroie (2) **caractérisé en ce que** l'élément de blocage (5) est disposé dans la tête (3) déplaçable le long de la course (6) parallèlement à la direction de courroie (24), dans lequel la direction de courroie (24) est parallèle à la direction d'insertion de la courroie (34) le long de laquelle la courroie (2) peut être insérée dans l'ouverture traversante (4), et la tête (3) comprend une ouverture supérieure (15), dans lequel l'élément de blocage (5) est accessible au moins à partir d'un côté supérieur (16) de la tête (3) perpendiculaire à la direction de courroie (24) à travers l'ouverture supérieure (15).

2. Collier de serrage (1) selon la revendication 1, dans lequel la tête (3) et/ou l'élément de blocage (5) comprennent des faces de butée (25), en particulier des faces de butée (25) qui sont perpendiculaires à la direction de courroie (24) ou à la direction de serrage (14), pour bloquer un mouvement par rapport à l'autre lorsque le collier de serrage (1) est serré.

3. Collier de serrage (1) selon l'une des revendications 1 ou 2, dans lequel l'élément de blocage (5) et la tête (3) sont fabriqués dans des matériaux différents.

4. Collier de serrage (1) selon l'une des revendications 1 à 3, dans lequel l'élément de blocage (5) comprend une protubérance (51) faisant saillie le long d'une direction (28) d'un mouvement de verrouillage, dans lequel la protubérance est adaptée pour être tirée sous une face supérieure intérieure (29) de la tête (3) et créer un ajustement positif entre les dents (23) de l'élément de blocage (5) et la courroie (2).

5. Collier de serrage (1) selon l'une des revendications 1 à 4, dans lequel l'élément de blocage (5) engage deux ou plusieurs dents (23) sur la courroie (2).

6. Collier de serrage (1) selon l'une des revendications 1 à 5, dans lequel l'élément de blocage (5) et/ou la courroie (2) comprennent des faces de guidage (19) s'étendant le long de la direction de serrage (14) pour guider la courroie.

7. Collier de serrage (1) selon l'une des revendications 1 à 6, dans lequel la tête (3) et l'élément de blocage (2) sont intégralement reliés l'un à l'autre par une section de connexion (53).

8. Collier de serrage (1) selon la revendication 7, dans lequel la section de connexion (53) est formée d'une courroie (2).

9. Collier de serrage (1) selon l'une des revendications 1 à 8, dans lequel la tête (3) présente une ouverture avant (71) sur un côté avant (70), dans lequel l'ouverture avant (71) est adaptée à l'insertion de l'élément de blocage (5) à travers l'ouverture avant (71) lorsque la courroie (2) est à l'extérieur de l'ouverture traversante (4) et adaptée au blocage de la sortie de l'élément de blocage (5) à travers l'ouverture avant (71) lorsque la courroie (2) est située dans l'ouverture traversante (4).

10. Collier de serrage (1) selon la revendication 9, dans lequel une hauteur intérieure (79) de l'ouverture avant (71) est supérieure à une hauteur (95) de l'élément de blocage (5) et inférieure à la hauteur (99) de la combinaison de l'élément de blocage (5) et de la courroie (2).

11. Collier de serrage (1) selon l'une des revendications 7 à 10, dans lequel la section de connexion (53) fait saillie sur le côté avant (70) de la tête (3).

12. Collier de serrage (1) selon l'une des revendications 7 à 11, dans lequel la section de connexion (53) fait saillie de la tête (3) à proximité de l'ouverture avant (71).
